(19) Europäisches Patentamt
European Patent Office
Office européen des brevets

(11) Publication number: 0 041 828
A2

(12) # EUROPEAN PATENT APPLICATION

(21) Application number: 81302471.8

(22) Date of filing: 03.06.81

(51) Int. Cl.³: C 08 F 10/00
C 08 F 4/62

(30) Priority: 11.06.80 GB 8019038
11.06.80 GB 8019042
16.07.80 GB 8023194
16.07.80 GB 8023195
27.03.81 GB 8109679
22.05.81 GB 8115897

(43) Date of publication of application:
16.12.81 Bulletin 81/50

(84) Designated Contracting States:
BE DE FR GB IT NL SE

(71) Applicant: IMPERIAL CHEMICAL INDUSTRIES LIMITED
Imperial Chemical House Millbank
London SW1P 3JF(GB)

(72) Inventor: Caunt, Anthony David
1 Templewood
Welwyn Garden City Hertfordshire(GB)

(72) Inventor: Haward, Robert Nobbs
106 Metchley Lane
Birmingham 17(GB)

(72) Inventor: Parsons, Ian William
96 Presthope Road
Selly Oak Birmingham(GB)

(74) Representative: James, David Gomer et al,
Imperial Chemical Industries Limited Legal Department: Patents Thames House North Millbank
London SW1P 4QG(GB)

(54) **Transition metal composition, production and use.**

(57) A transition metal composition is obtained by reacting at least one specified transition metal compound with an organic magnesium compound. The transition metal compound can be a compound of a metal of Group VA or Group VIA, or a mixture of compounds can be used, including a Group IVA metal compound such as titanium tetrachloride. The reaction may be carried out in the presence of polyhalogenated compound such as carbon tetrachloride. The composition obtained may be a material containing a magnesium compound and compounds of at least two transition metals. The transition metal composition may be subjected to further treatments, for example with a halogen-containing transition metal compound or a Lewis Base compound. The composition may be used, together with an organic metal compound, to give a polymerisation catalyst which can be used for the polymerisation of ethylene or other olefine monomers.

FIG.1

A $MO_aR^1_bX_n$

B $R^3_cMgR^4_{(2-c)}$

C $R^3_cMgR^4_{(2-c)}dR^3_eAlR^4_{(3-e)}$

D $R^3_cMgR^4_{(2-c)}+dR^3_eAlR^4_{(3-e)}$

E $M^1_fM^2_hM^3_{(1-f-h)}Mg_kAl_mO_pX_q$ r. L

F $Ti_fV_{(1-f)}Mg_kO_pX_q$

G $CH_2-CHR^5$

EP 0 041 828 A2

# TRANSITION METAL COMPOSITION, PRODUCTION AND USE

The present invention relates to the production of transition metal compositions and the compositions obtained, and is particularly concerned with the production of transition metal halide compositions which also include magnesium halides and the use of the compositions obtained as components of catalyst systems for the polymerisation of unsaturated monomers, particularly olefine monomers, such as ethylene and propylene.

The use of transition metal compounds in combination with organic compounds of non-transition metals as catalyst systems for the polymerisation of olefine monomers has been known for many years. It has also been proposed to support the transition metal compound on various inert support materials. One proposal in which a support is used is in British Patent Specification 1 286 867 which discloses a catalyst system for olefine polymerisation in which one component of the catalyst is the product obtained by contacting a titanium tetrahalide with a support comprising an anhydrous magnesium halide in an active form. There have also been proposals to use catalyst systems based on the reduction product of a transition metal compound with an organic magnesium compound such as is described for example in British Patent Specifications 1 030 770 and 1 299 862. It has also been proposed, for example in Belgian Patent Specification 866 420, to use a combination of transition metal compounds, for example a mixture of titanium and vanadium compounds.

According to the present invention there is provided a process for the production of a transition metal composition, which process comprises reacting at least one transition metal compound with an organic magnesium compound, or a complex or mixture of an organic magnesium

compound with an aluminium compound, wherein the at least one transition metal compound includes at least one transition metal compound of the formula A in the accompanying formulae drawings, wherein

M is a transition metal of Group IVA, VA or VIA of the Periodic Table;

X is a halogen atom;

$R^1$ is a hydrocarbon radical, a substituted hydrocarbon radical or a group $OR^2$;

$R^2$ is a hydrocarbon radical or a substituted hydrocarbon radical;

a is 0, 1 or 2;

b is 0 or a number up to the valency of M;

n is 0 or a number up to the valency of M;

2a+b+n equals the valency of M; with the provisos 1) that n is less than four when M is titanium and 2) that 2a is less than the valency of M.

In the accompanying drawings,

Figure 1 illustrates compounds which may be used in the present invention, the compounds being represented by the formulae A to G; and

Figure 2 is a graphical representation of the polymerisation rate using a catalyst system incorporating a transition metal composition obtained by the process of the present invention compared to the polymerisation rate using a known catalyst system.

All references herein to the Periodic Table are to the Short Periodic Table as set out inside the back cover of "General and Inorganic Chemistry" by J R Partington, Second Edition, published by MacMillan and Company Limited, London in 1954.

The transition metal which is M is preferably at least one metal of Group VA or VIA of the Periodic Table such as vanadium or chromium. It is preferred that n has a value greater than 0 and particularly that n has a value

of at least one. Preferred transition metal compounds are the halides or oxyhalides such as vanadium tetrachloride, vanadium oxytrichloride and chromyl chloride. However, halide compounds containing a group $OR^2$ may be used such as, for example, n-butoxy vanadyl dichloride ($VO(On\text{-}C_4H_9)Cl_2$).

In addition to using at least one transition metal compound of the formula A, the process of the present invention may be effected using a mixture of transition metal compounds wherein at least one transition metal compound is a compound of formula A and at least one transition metal compound is a titanium tetrahalide, particularly titanium tetrachloride. It is a particular embodiment of the present invention to react at least two transition metal compounds with the organic magnesium compound or the complex or mixture of the organic magnesium compound with the aluminium compound. More specifically, according to a further aspect of the present invention, there is provided a process comprising reacting at least two transition metal compounds with an organic magnesium compound or a complex or mixture of the organic magnesium compound with an aluminium compound, wherein

a) the at least two transition metal compounds are both compounds of the formula A; or

b) at least one transition metal compound is a compound of the formula A and at least one transition metal compound is a titanium tetrahalide.

Mixtures of transition metals which may be used in accordance with the present invention include titanium tetrachloride and vanadium tetrachloride; or titanium tetrachloride and vanadium oxytrichloride or titanium tetrachloride, vanadium tetrachloride and chromyl chloride.

The organic magnesium compound which is reacted with the at least one transition metal compound of formula A may be a compound of formula B in the accompanying formulae drawings. The complex or mixture of the organic magnesium compound with an aluminium compound may be represented by formulae C and D respectively in the accompanying formulae drawings. In the formulae B, C and D,

each $R^3$, which may be the same or different, is a hydrocarbon radical;

each $R^4$, which may be the same or different, is a halogen atom, a hydrogen atom or an oxyhydrocarbon radical;

c has a value of from 0 up to 2 with the proviso that when each $R^4$ is halogen, the value of c is greater than 0;

d has a value such that $0 < d \leq 2$;

e has a value of from 0 up to 3.

The groups $R^3$ are all typically alkyl groups and conveniently are alkyl groups containing from 1 up to 20 carbon atoms and especially from 1 up to 6 carbon atoms. The value of c is preferably greater than 0 and it is particularly preferred that the value of c is at least 0.5 and especially that the value of c is 2. The value of d is typically in the range from 0.05 up to 1. The value of e is typically at least one and is preferably 3. It will be appreciated that in the formulae B, C and D, when the values of c and d are other than whole numbers, mixtures of compounds will be necessary in order to satisfy these intermediate values of c and d.

The organic magnesium compound of formula B, which is also present in the materials of formulae C and D, may be a Grignard reagent such as ethyl magnesium chloride or butyl magnesium bromide, which optionally may be complexed with an ether, or may be a compound such as

ethyl magnesium ethoxide, but is preferably a magnesium dihydrocarbyl compound, particularly a dialkyl magnesium compound such as diethyl magnesium, dibutyl magnesium or a mixed material such as ethyl butyl magnesium. Whilst the aluminium compound, which is present in the materials of formulae C and D, may be aluminium chloride or aluminium bromide, it is preferably an organic aluminium compound such as ethyl aluminium dichloride, diethyl aluminium monochloride or diethyl aluminium ethoxide and is particularly a compound such as aluminium triethyl or aluminium tributyl. It is preferred that the organic magnesium compound, or the complex or mixture including the organic magnesium compound, is soluble in hydrocarbon solvents. Organic magnesium compounds which are soluble in hydrocarbon solvents include a mixture of n-butyl and secondary butyl magnesium.

It will be appreciated that the materials of formulae C and D may be present together as an equilibrium mixture and indeed such a mixture can be obtained merely by mixing the organic magnesium compound together with the aluminium compound when the resultant product may be a mixture of the organic magnesium compound, the aluminium compound and the complex of formula C. For convenience hereafter, the term "organic magnesium compound" will be used to mean the organic magnesium compound or a complex or mixture of the organic magnesium compound with an aluminium compound.

The organic magnesium compound is conveniently used as a solution in a suitable inert solvent, particularly an aliphatic or aromatic solvent, such as hexane, heptane or toluene.

It is a particular aspect of the present invention that the at least one transition metal compound of the formula A is reacted with an organic magnesium compound of the formula B wherein c has the value of 2 and each $R^3$ is an alkyl group.

The at least one transition metal compound of the formula A is preferably a compound which is a liquid at ambient temperature, or is a solid which is either readily liquified or is soluble in a suitable inert liquid medium. The at least one transition metal compound may be used at a temperature at which it is in the liquid state, or may be used as a solution in a suitable inert liquid medium. If more than one transition metal compound is used, the transition metal compounds may be premixed before being reacted with the organic magnesium compound. The premixing of the transition metal compounds can be effected at a temperature at which all of the transition metal compounds being mixed together are in the liquid state or the mixing may be effected in the presence of an inert liquid medium such as an inert liquid aliphatic hydrocarbon, preferably a liquid in which all the transition metal compounds are soluble. The solution of the at least one transition metal compound in an inert liquid medium, or the mixture of at least two transition metal compounds, can be formed at any suitable temperature and is conveniently formed at ambient temperature (about 15°C to 30°C) although lower or higher temperatures may be used if this is considered to be desirable.

The proportion of the organic magnesium compound which is reacted with the at least one transition metal compound may be varied over a considerable range. Thus, it is possible to react the organic magnesium compound with a substantial excess of the at least one transition metal compound but it will be appreciated that, with an appropriate adjustment of the proportions of the components of the mixture, the organic magnesium compound may be added in a quantity sufficient to give essentially complete reaction of the components of the mixture.

The reaction between the at least one transition metal compound and the organic magnesium compound may be

effected at any convenient temperature, for example at a temperature of from -100°C up to +150°C, especially -50°C up to +150°C, depending on the particular organic magnesium compound used. It is convenient to react the organic magnesium compound with the transition metal metal compound, or mixture of transition metal compounds, at ambient temperature. The reaction is conveniently effected for a period of time of from one minute up to 12 hours depending on the temperature used. If the organic magnesium compound is mixed with the at least one transition metal compound at ambient temperature then, after mixing for a time sufficient to allow at least some reaction to occur, for example at least one hour, the mixture may, if desired, be heated, for example to a temperature in the range from 60°C to 150°C. After this heating stage, the solid reaction product may be separated from the liquid reaction medium, optionally washed one or several times and thereafter suspended in a suitable inert hydrocarbon liquid medium. Alternatively, the solid reaction product obtained may be separated from the liquid reaction medium, for example by filtration or decantation, optionally washed once or several times with a suitable inert hydrocarbon liquid medium and thereafter suspended in a further quantity of a hydrocarbon liquid medium and heated to the elevated temperature. In either of the foregoing alternative procedures, the mixture is maintained at the elevated temperature for a time which is conveniently from 0.5 up to 10 hours.

The reaction between the organic magnesium compound and the at least one transition metal compound may be effected in the presence of a halogenated compound.

Thus, as a further aspect of the present invention there is provided a process in which at least one transition metal compound which is at least one transition metal compound of the formula A is reacted with an organic

magnesium compound, or a complex or mixture of an organic magnesium compound and an aluminium compound, in the presence of a halogenated compound.

According to a modification of this further aspect of the present invention, more than one transition metal compound; or at least one transition metal compound and at least one titanium tetrahalide are reacted with the organic magnesium compound in the presence of the halogenated compound.

It will be appreciated that the halogenated compound is distinct from the at least one transition metal compound, the organic magnesium compound (including the aluminium compound) and the titanium tetrahalide which may be present in the reaction mixture. The halogenated compound is preferably a non-metallic compound, particularly a halocarbon compound which may optionally contain hydrogen. Especially preferred halogenated compounds are the polyhalogenated compounds and, in particular, the polyhalogenated hydrocarbons. The halogenated compound can be one containing up to 18 carbon atoms. Examples of halogenated compounds which may be used include silicon tetrachloride, carbon tetrabromide and polyhalogenated ethanes or propanes, and especially carbon tetrachloride. Normally the halogenated compound will be mixed with the at least one transition metal compound and then added to the organic magnesium compound or *vice-versa*. Alternatively, the organic magnesium compound may be added to the halogenated compound and the at least one transition metal compound added, followed, optionally, by more of the organic magnesium compound.

If a mixture of the halogenated compound and the at least one transition metal compound is formed and reacted with the organic magnesium compound, the proportion of halogenated compound in the mixture with the at least one transition metal compound may be at least 25%, and not

more than 99%, by volume, for example from 50 to 80% by volume, of the mixture of halogenated compound and the at least one transition metal compound. The optimum quantity of the halogenated compound which is used depends on a number of factors including the nature of the particular halogenated compound, the type of organic magnesium compound which is reacted with the mixture, the proportion of the organic magnesium compound which is used and the nature of the at least one transition metal compound.

The mixture of the at least one transition metal compound and the halogenated compound may be formed by mixing the materials together in the presence of an inert liquid such as an aliphatic hydrocarbon liquid, but the mixing is conveniently effected in the absence of any such other liquid materials. Thus, the mixing is conveniently effected at a temperature at which all of the reacting materials are in the liquid state or at a temperature at which the various materials are mutually soluble. A suitable temperature for effecting the mixing of the at least one transition metal compound with the halogenated compound is ambient temperature which is 15°C to 30°C. However, it will be appreciated that lower or higher temperatures can be used if necessary.

The reaction conditions, in particular temperature and time, when using a halogenated compound are generally similar to those used when the halogenated compound is absent. However, when using a halogenated compound, it is preferred to separate the solid reaction product from the liquid reaction medium and wash the solid at least once with an inert liquid medium before it is used as a catalyst compound.

The preferred proportions of the organic magnesium compound depend on whether or not the halogenated compound is present in the reaction mixture. In general, in the absence of the halogenated compound, the molar ratio of

magnesium, or (magnesium plus aluminium) to transition metal in the reaction mixture is less than 3 to 1 and molar ratios of from 0.5 to 1 up to 2 to 1 give useful results. If a halogenated compound is present however, a higher proportion of the organic magnesium compound is generally preferred. More specifically, in the presence of the halogenated compound, in general the molar ratio of magnesium, or (magnesium plus aluminium) to transition metal in the reaction mixture is less than 3 to 1 and molar ratios of from 0.5 to 1 up to 2 to 1 give useful results. If a halogenated compound is present however, a higher proportion of the organic magnesium compound is generally preferred. More specifically, in the presence of the halogenated compound, in general the molar ratio of magnesium or (magnesium plus aluminium) to transition metal in the reaction mixture is in the range 1 to 1 up to 50 to 1 and preferably in the range 3 to 1 up to 10 to 1.

The reaction between the at least one transition metal compound and the organic magnesium compound may be effected in the presence of a support material such as alumina or silica. When a support material is present, it is preferred that at least one of the reactants has been adsorbed onto the support before effecting the reaction.

As an alternative to heating the solid reaction product to a temperature in the range 60 to 150°C as hereinbefore described, the solid reaction product may be separated from the liquid reaction medium, optionally washed several times with an inert liquid medium and then contacted with a quantity of one or more halogen-containing transition metal compounds either as the undiluted material or as a solution in a suitable solvent such as a liquid hydrocarbon medium. The halogen-containing transition metal compound used may be the same as, or different from, the at least one transition metal compound which is used in the preparation of the solid

reaction product. Thus, the solid reaction product may be a product obtained from a vanadium compound such as, for example, vanadium tetrachloride or vanadium oxytrichloride, and this solid reaction product is contacted with a titanium compound, for example titanium tetrachloride. After mixing the solid reaction product and the halogen-containing transition metal compound, the mixture is conveniently heated to an elevated temperature which may be from 60°C up to 150°C, particularly from 80°C up to 120°C. The time of heating with the halogen-containing transition metal compound is dependent on the temperature used and is conveniently from 0.5 up to 24 hours, for example from 1 up to 5 hours. When the heating in the presence of the one or more halogen-containing transition metal compounds has been completed, the solid reaction product is then separated from the liquid reaction medium which is, or which contains, the one or more halogen-containing transition metal compounds, for example by filtration or decantation. If it is desired to remove any adsorbed halogen-containing transition metal compounds from the separated solid product, the solid may be washed several times with an inert liquid medium and then, if desired, dried or suspended in a quantity of an inert liquid medium.

The solid reaction product may be separated from a liquid medium and dried at least once during the preparation procedure, particularly before the optional treatment with the one or more halogen-containing transition metal compounds.

The drying procedure may be effected either by passing a stream of an inert gas such as nitrogen or argon through the solid, conveniently at ambient temperature, although lower or higher temperatures (for example up to 120°C) may be used, or by heating the material at a moderate temperature, preferably not exceeding 60°C, at a

reduced pressure, for example not greater than about 10 mm of mercury. The drying may be effected for several hours, for example from 2 up to 24 hours. The solid is a free-flowing powder after drying.

A Lewis Base compound may be used in the process of the present invention, at one or more of the various stages thereof. Thus, the reaction between the at least one transition metal compound and the organic magnesium compound may be effected in the presence of a Lewis Base compound, which Lewis Base compound may be present as a liquid medium in which the reaction occurs, or may be dissolved in the liquid reaction medium or may complexed with one or more of the reagents used in the reaction. Alternatively, the Lewis Base compound may be added subsequent to the production of the solid reaction product and before or after the optional treatment with the one or more halogen-containing transition metal compounds and the optional drying step. The Lewis Base compound may be added by suspending the solid reaction product in a liquid medium which is, or which contains, the Lewis Base compound and stirring the mixture at any convenient temperature, typically not more than 100°C, for a length of time sufficient for at least some of the Lewis Base compound to be incorporated into the solid, typically from 15 minutes up to 10 hours. An alternative procedure for incorporating a Lewis Base compound into the solid is to grind the solid in the presence of the Lewis Base compound, and typically such grinding is effected without using external heat and for a time of from 0.5 up to 100 hours.

The Lewis Base compound which may be used in the process of the present invention can be any Lewis Base compound, especially organic Lewis Base compound, which has previously been proposed for use in an olefin polymerisation catalyst system. Thus, the Lewis Base

compound may be an ether, an ester, a ketone, an alcohol, an ortho-ester, a sulphide (a thioether), an ester of a thiocarboxylic acid (a thioester), a thioketone, a thiol, a sulphone, a sulphonamide, a fused ring compound containing a heterocyclic sulphur atom, an organic silicon compound such as a silane or siloxane, an amide such as formamide, urea and the substituted derivatives thereof such as tetramethylurea, thiourea, an alkanolamine, an amine, which term includes a cyclic amine, a diamine or a polyamine, for example pyridine, quinoline or tetramethylethylenediamine or an organic phosphorus compound such as an organic phosphine, an organic phosphine oxide, an organic phosphite or an organic phosphate. The use of organic Lewis Base compounds is disclosed, inter alia, in British Patent Specifications 803 198, 809 717, 880 998, 896 509, 920 118, 921 954, 933 236, 940 125, 966 025, 969 074, 971 248, 1 013 363, 1 017 977, 1 049 723, 1 122 010, 1 150 845, 1 208 815, 1 234 657, 1 324 173, 1 359 328, 1 383 207, 1 423 658, 1 423 659 and 1 423 660.

The product obtained by the process of the present invention is a material containing magnesium and at least one transition metal. The product typically contains halogen, especially chlorine, and may additionally contain oxygen and aluminium atoms and also a Lewis Base compound.

Thus, according to a further aspect of the present invention there is provided a transition metal composition having a composition represented by the formula E in the accompanying formulae drawings, wherein

$M^1$ is a transition metal of Group IVA, VA, or VIA of the Periodic Table;

$M^2$ is a transition metal of Group IVA, VA or VIA of the Periodic Table, and is different from $M^1$;

$M^3$ is a transition metal of Group IVA, VA or VIA of the Periodic Table and is different from both $M^1$ and $M^2$;

X is a halogen atom;

L is a Lewis Base compound;

f has a value which is such that $0<f<1$;

h has a value which is such that $0 \leq h<1$ and $(f+h)<1$;

k has a value of at least 0.2;

m has a value which is such that $0 \leq m<2k$;

p has a value of from 0 up to 2;

q has a value of at least 1;

$(2p+q)$ is sufficient to satisfy the metal valencies; and

r has a value of from 0 up to a value corresponding to six times the total number of metal atoms present.

The composition contains two or three different transition metals and transition metals which may be present in the composition include titanium, vanadium and chromium.

Typically, f has a value of at least 0.05, conveniently between 0.2 and 0.8 and very conveniently between 0.4 and 0.6. The value of h is typically 0 but if h has a value of greater than 0 it is preferred that h is at least 0.05. The value of $(f+h)$ preferably does not exceed 0.95. The value of k preferably does not exceed 10 and is preferably at least 0.5, for example in the range 0.5 up to 3.0. It is preferred that m is 0. The value of p is typically 0. If p has a value greater than 0, then p typically does not exceed one. X is conveniently chlorine but it should be appreciated that a mixture of halogen atoms, for example chlorine and bromine, may be present in the composition. The value of q will be dependent on the value of $(k+m)$ and is typically at least 4 and is especially at least 5. Typically the value of q will not exceed 24.

In many of the compositions in accordance with the present invention, there is no Lewis Base compound present and the value of r is 0. If the composition includes a Lewis Base compound, the value of r is typically at least 2 but usually will not exceed a value of 12. The Lewis Base compound L can be any suitable Lewis Base compound and, in particular, can be an organic Lewis Base of the type hereinbefore described.

A transition metal composition within the present invention contains titanium and vanadium as the only transition metals. A transition metal composition of this type is represented by formula F in the accompanying formulae drawings, where X, f, k, p and q are as hereinbefore defined. In the formula F, p is preferably 0.

The transition metal composition of the present invention is a solid which is typically in the form of discrete secondary particles which are essentially spherical and are agglomerates of smaller primary particles.

The transition metal composition obtained by the process of the present invention is suitable for use as a component of a polymerisation catalyst. For this purpose, the transition metal composition may be suspended in a suitable inert hydrocarbon medium for example hexane, heptane, octane, decane, or a mixture of dodecane isomers, and used together with other compounds which are known for this purpose, to effect the polymerisation of an olefine monomer. However, it will be appreciated that the transition metal composition may be used as a component of a polymerisation catalyst without being suspended in any liquid medium particularly when the polymerisation is to be effected either in a gaseous monomer or in a liquid monomer phase.

Thus, as a yet further aspect of the present invention there is provided a polymerisation catalyst

system which is obtained by mixing together 1) a transition metal composition obtained by the process of the present invention as hereinbefore described, or a transition metal composition of formula E or F in the attached formulae drawings, and 2) at least one organic compound of aluminium, or of a non-transition metal of Group IIA of the Periodic Table, or a complex of an organic compound of a non-transition metal of Group IA or IIA of the Periodic Table together with an organic compound of aluminium.

Component 2) of the catalyst can be a magnesium-containing compound such as that represented by formulae B, C or D in the accompanying formulae drawings. However, it is preferred that component 2) is, or contains, an organic aluminium compound. If the component 2) is a complex of an organic compound of a metal of Group IA with an organic aluminium compound, this compound may be of the type lithium aluminium tetraalkyl. It is preferred that the component 2) is an organic aluminium compound which may be, for example, an aluminium hydrocarbyl sulphate, or an aluminium hydrocarbyl hydrocarbyloxy but is preferably an aluminium hydrocarbyl halide such as a dihydrocarbyl aluminium halide and especially an aluminium trihydrocarbyl or a dihydrocarbyl aluminium hydride. The organic aluminium compound is preferably an aluminium trihydrocarbyl compound, especially an aluminium trialkyl in which the alkyl group contains from 1 up to 8 carbon atoms such as, for example, triethyl aluminium, tributyl aluminium and trioctyl aluminium.

In addition to the transition metal composition and the organic metal compound, the catalyst system can contain other components such as are known in the art. Thus, the catalyst system may include at least one Lewis Base component. The Lewis Base component may be one of the many Lewis Base compounds which have been proposed

for this purpose and which affect the activity and/or stereospecificity of the Ziegler polymerisation catalyst system. Thus, the Lewis Base compound may be any of those noted previously herein as being suitable for group L in the transition metal composition of formula E. Useful catalyst systems can be obtained by using, as the Lewis Base component, esters, particularly aromatic esters such as ethyl benzoate, ethyl anisate or methyl p-toluate.

The catalyst system may also include other components which affect the characteristics of the system, particular examples of which are the cyclic polyenes such as cycloheptatriene, cyclooctatetraene, cyclooctatriene and the derivatives thereof including the alkyl- and alkoxy-substituted derivatives; tropylium salts and complexes; tropolone and tropone.

The proportions of the various catalyst components can be varied quite widely as is known in the art. Typically, the amount of the organic metal compound which is used as component 2) of the catalyst, will be at least 1 mole for each gramme atom of the total of transition metal which is present in the transition metal composition. Preferably the amount of the organic metal compound does not exceed 1000 moles for each gramme atom of the total of transition metal and it is particularly preferred that the amount of the organic metal compound does not exceed 100 moles for each gramme atom of the total of transition metal.

If the catalyst system includes a Lewis Base component, this is conveniently present in an amount of from 0.1 up to 1.0 mole for each mole of component 2) of the catalyst system. Any polyene which may be present in the catalyst system is preferably present in an amount of not greater than the molar proportion of component 2) of the catalyst system.

The catalyst components may be mixed together in the presence or absence of the monomer, or monomer mixture,

which is to be polymerised. If mixing is effected in the presence of the monomer, or monomer mixture, to be polymerised, it is preferred either that the amount of monomer, or monomer mixture, present is relatively small whereby only a small proportion of polymer is formed, for example up to 10 moles for each gramme atom of the total of transition metal, or alternatively that the mixing is effected in the polymerisation vessel. If the catalyst is obtained by mixing together more than two components, it may be convenient to pre-mix some of the catalyst components and complete the mixing in the polymerisation vessel. In effecting the mixing of the catalyst components, it is preferred that any Lewis Base compound which is present is added to the transition metal composition only in the presence of the organic metal compound which is component 2) of the catalyst. Any Lewis Base compound which is present may be pre-mixed with the organic metal compound which is component 2) of the catalyst and this mixture may then be mixed with the transition metal composition, conveniently within the polymerisation vessel.

Catalyst systems obtained in accordance with the present invention are suitable for the polymerisation and copolymerisation of unsaturated monomers, particularly ethylenically unsaturated hydrocarbon monomers such as the olefine monomers.

Thus, as a further aspect of the present invention there is provided a process for the production of a polymer or copolymer of an unsaturated monomer wherein at least one ethylenically unsaturated hydrocarbon monomer is contacted under polymerisation conditions with a polymerisation catalyst as hereinbefore defined.

The monomer which may be contacted with the catalyst system is one having the formula G as set out in the accompanying formulae drawings.

In the formula G,

$R^5$ is a hydrogen atom or a hydrocarbon radical.

Thus, the monomer may be ethylene, propylene, butene-1, pentene-1, hexene-1, 4-methylpentene-1, styrene, 1,3-butadiene or any other olefine which satisfies formula G. The monomer is preferably an olefine monomer particularly an aliphatic olefine monomer, containing not more than 10 carbon atoms. The monomers may be homopolymerised or may be copolymerised together. If propylene is copolymerised it is preferred to effect the copolymerisation with ethylene, conveniently using a sequential copolymerisation process as is described in British Patents 970 478; 970 479 and 1 014 944. If ethylene is being copolymerised using the process of the present invention, it is preferred to carry out the copolymerisation using a mixture of ethylene and the desired comonomer, for example butene-1 or hexene-1, wherein the mixture of monomers has essentially the same composition throughout the polymerisation process.

The process of the present invention can be used for the polymerisation or copolymerisation of ethylene to give a high yield of polymer relative to the amount of the total of the transition metals present in the transition metal composition which is used as component 1) of the catalyst system.

It is well known that catalysts of the "Ziegler" type, such as the present catalyst system, are susceptible to the effects of impurities in the reaction medium. Thus, the activity and stereospecificity of the catalyst can be effected by the presence of small quantities of impurities, particularly oxygen and polar compounds such as water and alcohol, in the monomer and any diluent which may be used. Hence, it is desirable to use pure monomers and diluents and with catalysts of high activity it is especially desirable to use materials having a high degree

of purity. Accordingly, rather than using materials of commercial purity, it may be found desirable to purify these further. The purification may be effected in more than one stage if desired and the particular purification treatment used will be dependent on the purity of the starting materials. Satisfactory purity can be achieved in most cases by passing the monomer, and any diluent which may be used, through a bed of a material which is capable of absorbing the impurities contained in the monomer or diluent. Suitable techniques of achieving a satisfactory purity are described in British Patent Specifications 1 111 493, 1 226 659 and 1 383 611. The level of impurities in the monomer or diluent are preferably less than a total of 20 ppm (parts per million) by weight and in particular it is preferred that the monomer contains less than 1 ppm by weight of water and less than 1 ppm by weight of oxygen.

The polymerisation process can be carried out in the presence or absence of an inert diluent such as a suitably purified paraffinic hydrocarbon. If a diluent is not used for the polymerisation, an excess of liquid monomer can be used as the suspension medium for the catalyst and polymer product. Alternatively, polymerisation can be effected using a gaseous monomer in contact with the solid phase comprising the catalyst system and the polymer product, such a process being effected using any technique which is suitable for carrying out a gas solid reaction, for example a fluidised bed reactor system, a stirred bed reactor system or a ribbon blender type of reactor.

If polymerisation is effected in gas phase, it may be effected by introducing the monomer, for example propylene, into the polymerisation vessel as a liquid and operating with conditions of temperature and pressure within the polymerisation vessel which is such that the liquid monomer vaporises, thereby giving an evaporative

cooling effect, and essentially all of the polymerisation occurs with a gaseous monomer. Polymerisation in gas phase may be effected using conditions which are such that the monomer is at a temperature and partial pressure which are close to the dew point temperature and pressure for that monomer, for example as described in more detail in British Patent Specification 1 532 445.

Polymerisation may be effected either in a batch manner or on a continuous basis, and the catalyst components may be introduced into the polymerisation vessel separately or all the catalyst components may be mixed together before being introduced into the polymerisation reactor, particularly if polymerisation is being effected on a continuous basis. It will be appreciated that any pre-mixing of all the catalyst components can be effected in the presence of a monomer and, as previously noted, such pre-mixing will result in at least some polymerisation of this monomer before the catalyst system is introduced into the polymerisation vessel. If the polymerisation is being carried out in the gas phase, the catalyst components may be added to the polymerisation reactor suspended in a stream of the gaseous monomer or monomer mixture.

The polymerisation can be effected in the presence of a chain transfer agent such as hydrogen or a zinc dialkyl, in order to control the molecular weight of the product formed. If hydrogen is used as the chain transfer agent in the polymerisation of propylene, it is conveniently used in an amount of from 0.01 up to 5.0%, particularly from 0.05 up to 2.0% molar relative to the monomer. When the monomer being polymerised is ethylene, or a mixture in which ethylene is a major polymerisable component (by moles), the amount of hydrogen used may be greater than that used for propylene and, in the homopolymerisation of ethylene, the reaction mixture may contain in excess of

50% molar of hydrogen, whereas if ethylene is being copolymerised, a lower proportion of hydrogen is used, typically not more than 35% molar. The amount of chain transfer agent will be dependent on the nature of component 1) and in particular on the transition metals present in component 1). We have found that if component 1) contains vanadium, particularly if vanadium is the only transition metal, a smaller proportion of hydrogen, for example not more than 15% molar, is sufficient to produce an appreciable reduction in the molecular weight of an ethylene polymer. The amount of chain transfer agent will also be dependent on the polymerisation conditions, especially the temperature, which, at polymerisation pressures not exceeding 50 kg/cm$^2$, is typically in the range from 20°C up to 100°C, preferably from 50°C up to 90°C.

Polymerisation can be effected at any pressure which has been previously proposed for effecting the polymerisation of monomers such as olefine monomers. However, although the polymerisation may be effected at pressures up to 3000 kg/cm$^2$, at which pressures the polymerisation temperature may be as high as 260°C, it is preferred to carry out the polymerisation at relatively low pressures. Whilst the polymerisation may be effected at atmospheric pressure, it is preferred to use a slightly elevated pressure and thus it is preferred that the polymerisation is effected at a pressure of from 1 kg/cm$^2$ up to 50 kg/cm$^2$, preferably from 5 up to 30 kg/cm$^2$.

For the polymerisation of propylene, it is preferred to operate at moderately low temperatures and thus temperatures in the range from 40°C up to 100°C, preferably not more than about 90°C are preferred.

Ethylene is conveniently polymerised or copolymerised, for example with butene-1 as the comonomer,

in a fluidised-bed reactor system to give a high yield of polymer. The fluidising gas is the gas mixture to be polymerised together with any hydrogen which is present as a chain transfer agent to control molecular weight. Thus, for the copolymerisation of ethylene and butene-1 to produce an ethylene copolymer having a density of less than about 940 $kg/m^3$, the gas mixture typically contains ethylene and butene-1 in the proportions of 0.25 up to 0.5 mole of butene-1 for each mole of ethylene together with inert materials, and hydrogen. The conditions of temperature and pressure for such polymerisations and copolymerisations are similar to those previously noted herein for the polymerisation of propylene. We have obtained a useful improvement in polymer yield by initially exposing the catalyst system to propylene under conditions such that only a small proportion of propylene, for example from 0.1 up to 5.0 grammes, is taken up by the catalyst system for each gramme atom of total transition metal in component 1) of the catalyst system, before effecting an ethylene polymerisation or copolymerisation.

It will be appreciated that the preparation of the transition metal composition, the production of the polymerisation catalyst and the polymerisation process are effected in an inert atmosphere which is conveniently nitrogen which is essentially free from impurities such as oxygen and water vapour.

Various aspects of the present invention will now be described by reference to the following Examples which are illustrative of the invention. In the Examples, all operations are effected under an atmosphere of nitrogen unless otherwise indicated. All the glass apparatus was carefully dried, for example in an air oven at 120°C for at least one hour, and thereafter purged with nitrogen before use.

EXAMPLE 1

A clean dry three necked 500 $cm^3$ round bottomed flask, containing a magnet coated with polytetrafluoroethylene, was fitted with a condenser, a penetrable rubber stopper and a nitrogen inlet. The condenser was surmounted by a white oil bubbler and the whole apparatus flushed out with nitrogen. 2.7 g of freshly prepared vanadium tetrachloride was charged to the flask and stirred by the magnet. A solution of di(n + s) butyl magnesium in heptane (9 $cm^3$, 0.62 g atom Mg/$dm^3$) was added dropwise by syringe. The suspension obtained was employed, with no further treatment as a catalyst component as set forth in Examples 5 to 14 hereafter.

EXAMPLE 2

In a nitrogen flushed apparatus similar to that used in Example 1 was placed a solution of freshly prepared vanadium tetrachloride (3.5 g) in pure, dry, n-heptane (155 $cm^3$). To this was added 11.7 $cm^3$ of the magnesium alkyl solution described in Example 1, with stirring, by syringe, and the suspension obtained was employed as a catalyst component as described in Examples 5 to 14 hereafter.

EXAMPLE 3

To pure dry magnesium (9.7 g), in a 500 $cm^3$ three necked flask, fitted with a tap funnel bearing a nitrogen inlet, mechanical stirrer, and condenser surmounted by a white oil bubbler, was added n-octyl bromide (5 $cm^3$), and the mixture heated with stirring, under nitrogen, in an oil bath until the reaction initiated. Then a solution of n-octyl bromide (24 $cm^3$), and tetrahydrofuran (20 $cm^3$), in pure dry n-heptane (50 $cm^3$) was added dropwise so as to keep the mixture refluxing, followed by a further solution of n-octyl bromide (24 $cm^3$) in n-heptane (50 $cm^3$), again added dropwise. The mixture was refluxed for a further 2 hours

and then n-heptane (120 $cm^3$) was added. The mixture was finally refluxed for 3 hours, and then allowed to cool, under nitrogen, overnight. The clear supernatant liquid was assayed for alkyl groups by titration, giving a result of 0.60 g alkyl groups/$dm^3$, and then used as a reductant.

A clean, dry flask, fitted with provision for filtering off the liquid contents and washing the solids, with a condenser surmounted by a white oil bubbler, with a mechanical stirrer, with a nitrogen inlet and with a penetrable rubber seal was flushed with nitrogen, and charged with a solution of freshly prepared vanadium tetrachloride (3.5 g) in pure n-heptane (10 $cm^3$). To this was added, at the ambient temperature, with stirring, by syringe, 77 $cm^3$ of the reducing solution prepared above. On cessation of reaction the mixture was filtered under nitrogen pressure and the liquid portion discarded. The residue was washed with n-heptane (3 x 100 $cm^3$) and slurried finally with n-heptane (200 $cm^3$). This slurry was then divided, under nitrogen, into two equal portions. The first portion (3A) was used directly to polymerise ethylene (see Examples 5 to 14 hereafter). The second portion (3B) was again filtered, and dried overnight under a slow nitrogen flow. The solid was then heated, with stirring, to 150°C for 3 hours, then cooled and washed with n-heptane (3 x 100 $cm^3$) before slurrying finally in 200 $cm^3$ of n-heptane. This catalyst gave improved yields of polyethylene, and a yield of 0.16 Kg/g of polypropylene (see Examples 5 to 14 hereafter), of which 47% was soluble in cold n-heptane.

EXAMPLE 4

The procedure was essentially as described for Example 3A. 100 $cm^3$ of a solution of n-octyl magnesium bromide (0.85 M in alkyl groups) was first placed in the flask and to this solution was added 4 $cm^3$ of vanadium

tetrachloride, at ambient temperature, and the mixture was stirred for one hour. The suspension was filtered and the solid was washed as in Example 3. The solid obtained was suspended in 150 $cm^3$ of n-heptane.

EXAMPLES 5 TO 14

A 2 $dm^3$ glass autoclave, fitted with a thermostatted water jacket for temperature control and with provision for mechanical stirring, was charged with 1.5 $dm^3$ of pure, dry, 'Isopar C', an aromatic-free heptane fraction. The vessel was sealed and heated to 70°C, when it was purged under vacuum, and by passage of nitrogen, before adjustment to the chosen reaction temperature. During this adjustment the liquid was saturated with monomer by bubbling ethylene through for at least one hour with stirring (750 rpm). Aluminium triethyl (3 $cm^3$) was then added by syringe to the liquid, followed by a portion of the suspension prepared in Example 1, in a quantity sufficient to provide 0.84 mg atom of vanadium. Ethylene was passed continuously through the vessel, and vented, so as to maintain the pressure within the vessel slightly above the ambient. After 3 hours the reaction was worked up by filtering the suspension, and drying the polymer by the passage of air at ambient temperature and finally drying further to constant weight in a vacuum oven at 60°C. A yield of 118 g of polymer was obtained, which represents a yield of 2.8 Kg polymer/g vanadium.

The procedure was repeated replacing the catalyst component of Example 1 with those of Examples 2, 3A, 3B and 4 and using differing amounts and types of organic aluminium compound. Details of the conditions used, and the results obtained, are set out in Table 1.

Table 1

| Example | Transition Metal | | Activator | | Monomer | Poly Temp | Activity (Kg/ polymer Per g V) |
|---|---|---|---|---|---|---|---|
| | Type (a) | Total Amount (mM) | Type (b) | Amount ($cm^3$) | (c) | (°C) | |
| 5 | 1 | 0.84 | TEA | 3 | E | 60 | 2.8 |
| 6 | 2 | 0.14 | TEA | 1 | E | 50 | 4.3 |
| 7 | 2 | 0.011 | TEA | 0.1 | E | 70 | 20 |
| 8 | 2 | 0.011 | TIBA | 0.2 | E | 65 | 5.5 |
| 9 | 2 | 0.021 | TEA | 0.2 | E | 40 | 7.8 |
| 10 | 3A | 0.26 | TEA | 0.5 | E | 60 | 3.3 |
| 11 | 3B | 0.25 | TEA | 0.5 | E | 60 | 4.6 |
| 12 | 3B | 0.24 | TEA | 0.5 | E | 65 | 5.2 |
| 13 | 3B | 1.7 | TIBA | 5 | P | 50 | 0.16 |
| 14 | 4 | 0.01 | DEAC | 0.2 | E | 30 | 42.8 |

Notes to Table 1

(a) Transition metal type is the product of Example 1, 2, 3A, 3B or 4 respectively.

(b) TEA is aluminium triethyl
TIBA is aluminium tri(isobutyl)
DEAC is diethyl aluminium chloride.

(c) E represents ethylene
P represents propylene.

The rate of polymerisation, measured as rate of monomer uptake in $dm^3$/hour, was noted at different times during the course of polymerisation using the catalyst component prepared in Example 1, and this is shown as the broken line curve on Figure 2 of the accompanying drawings. The solid line curve on Figure 2 shows the rate using a similar catalyst in the preparation of which the vanadium tetrachloride was replaced by titanium tetrachloride. These curves show that a more stable reaction rate is obtained using the vanadium based catalyst component.

EXAMPLE 15

A 500 $cm^3$ three necked flask, provided with an integral sintered glass plate for filtration and an exit for the filtrate, was fitted with a mechanical stirrer, a condenser surmounted by a white oil bubbler, and a two way adaptor bearing a nitrogen inlet and a penetrable rubber seal. The apparatus was assembled hot, after drying overnight at 120°C, and flushed with nitrogen whilst cooling to the ambient temperature. The apparatus was then charged by syringe with carbon tetrachloride (10 $cm^3$) and freshly prepared vanadium tetrachloride (3.5 g). A solution of di(n + s)butyl magnesium in heptane (20 $cm^3$, 0.62 g atom Mg/$dm^3$) was then added with constant stirring, by syringe. The mixture was allowed to react for one hour, was then filtered under pressure of nitrogen, and the solid residue washed three times with 100 $cm^3$ aliquots of n-heptane before finally suspending the residual solid in 200 $cm^3$ of n-heptane. Half this suspension (15A) was removed and a portion of this used to polymerise ethylene as set forth in Example 16 hereafter.

The remaining half of the suspension (15B) was filtered, under nitrogen pressure, and the solid dried at ambient temperature for 16 hours under a stream of

nitrogen. The dry solid was heated, with stirring to 150°C for 3 hours, then washed three times with 100 $cm^3$ aliquots of n-heptane before finally being suspended in n-heptane (200 $cm^3$). This suspension of the heat-treated catalyst component was then used in Examples 17 and 18 with results set out in Table 2 hereafter.

EXAMPLES 16 TO 18

A 2 $dm^3$ glass autoclave, fitted with a thermostatted water jacket, a temperature control and with provision for mechanical stirring, was charged with 1.5 $dm^3$ of pure, dry 'Isopar C'. The vessel was sealed and heated to 70°C, when it was purged under vacuum, and by passage of nitrogen, before adjustment to the chosen reaction temperature of 40°C. During this adjustment the liquid was saturated with monomer by bubbling ethylene through for at least one hour with stirring (750 rpm). Aluminium triethyl (0.5 $cm^3$) was then added by syringe to the liquid, followed by a portion of the catalyst suspension prepared in Example 15, to give a vanadium concentration as set out in Table 2. Ethylene was passed continuously through the vessel, and vented, so as to maintain the pressure within the vessel slightly above the ambient. After 3 hours, the reaction was worked up as described for Examples 5 to 14. Other polymerisations were carried out substantially as described but using different quantities of aluminium triethyl, vanadium composition and polymerisation temperature. The results obtained are set out in Table 2.

Table 2

| Example | Transition Metal | | Activator Amount ($cm^3$) | Poly Temp (°C) | Activity Kg/ polymer Per g V |
|---|---|---|---|---|---|
| | Type (d) | Total Amount (mM) | | | |
| 16 | 15A | 0.045 | 0.5 | 40 | 17.7 |
| 17 | 15B | 0.018 | 0.2 | 65 | 17.3 |
| 18 | 15B | 0.009 | 0.1 | 70 | 28.1 |

Notes to Table 2

(d) Transition metal type is the product of Example 15A or 15B respectively.

EXAMPLE 19

A carefully dried 2 $dm^3$ glass autoclave was charged with 1.5 $dm^3$ of 'Isopar C' which had previously been dried and purged with nitrogen. The apparatus and charge were purged with nitrogen for 1 hour at 80°C, and the temperature then adjusted to 50°C before starting the stirrer (750 rpm) and adding 5 $cm^3$ triisobutyl aluminium. Propylene was then admitted, and vented, so that the organic liquid became saturated with monomer; the monomer pressure was adjusted to 1 atmosphere and an amount of particulate catalyst, prepared as in Example 15A, containing 1.76 mg atom vanadium, was added. After 3 hours the polymer was isolated by steam distillation of the organic liquid and drying the polymer to constant weight in a vacuum oven at 60°C. The yield was 15 g of polypropene, representing 0.167 Kg polymer/g V. 39% by weight of the product obtained was soluble in cold heptane.

EXAMPLE 20

A 300 $cm^3$ vessel was equipped with a stirrer, access to vacuum, nitrogen or vent and a subaseal allowing the admission of reagents by syringe under anerobic conditions. The bottom of the vessel was fitted with a No. 2 glass filtration sinter and Rotaflo polytetrafluoroethylene exit tap. The apparatus was vacuum purged and the space below the sinter filled with dry 'Isopar C'. 30 $cm^3$ of carbon tetrachloride was introduced after drying with 4A Molecular Sieve. 7.5 $cm^3$ titanium tetrachloride and 7.5 $cm^3$ vanadium tetrachloride were added and the stirrer started. 27.5 $cm^3$ of a 0.59 Molar solution of n-butyl-s-butylmagnesium in 'Isopar C' were added over a few minutes. A rapid exothermic reaction took place. After half an hour the solid product was filtered off, washed three times using 100 $cm^3$ of 'Isopar C' for each wash and suspended in 100 $cm^3$ 'Isopar C'. Analysis of a slurry sample showed the presence of 50 m mol/$dm^3$ Ti, 451 m mol/$dm^3$ V, 143 m mol/$dm^3$ Mg and 1740 m mol/$dm^3$ Cl corresponding to a solid composition of formula $Ti_{0.10}\ V_{0.90}\ Mg_{0.29}\ Cl_{3.47}$.

EXAMPLE 21

The procedure of Example 20 was repeated using 12 $cm^3$ titanium tetrachloride and 3 $cm^3$ vanadium tetrachloride. The mixture was allowed to react for 1 hour before washing. Analysis of a sample from the final suspension in 'Isopar C' showed the presence of in m mol/$dm^3$ 25 of Ti, 228 of V, 164 of Mg and 1110 of Cl corresponding to a solid composition of formula $Ti_{0.10}\ V_{0.90}\ Mg_{0.65}\ Cl_{4.39}$.

EXAMPLE 22

The procedure of Example 20 was repeated using 30 $cm^3$ of 'Isopar C' in place of the 30 $cm^3$ of carbon tetrachloride. Analysis of a sample from the final

suspension in 'Isopar C' showed, in m mol/$dm^3$, 83 of Ti, 430 of V, 115 of Mg and 1870 of Cl, corresponding to a solid composition of formula

$Ti_{0.16}\ V_{0.84}\ Mg_{0.22}\ Cl_{3.65}$.

EXAMPLE 23

The procedure of Example 21 was repeated using 30 $cm^3$ of 'Isopar C' in place of the 30 $cm^3$ of carbon tetrachloride. Analysis of a sample from the final suspension in 'Isopar C' showed, in m mol/$dm^3$, 70 of Ti, 220 of V, 140 of Mg and 1195 of Cl, corresponding to a solid composition of formula

$Ti_{0.24}\ V_{0.76}\ Mg_{0.48}\ Cl_{4.12}$.

EXAMPLE 24

The procedure of Example 20 was repeated using 30 $cm^3$ dried carbon tetrachloride, 5 $cm^3$ of titanium tetrachloride, 0.5 $cm^3$ of vanadium tetrachloride and 0.5 $cm^3$ of chromyl chloride ($CrO_2Cl_2$). The solid produced was initially brick red going brown and finally pale purple in colour. Analysis of a sample from the final suspension in 'Isopar C' showed, in m mol/$dm^3$, 48 of Ti, 32 of V, 41 of Cr, 133 of Mg and 531 of chlorine.

EXAMPLE 25

The procedure of Example 24 was repeated using 30 $cm^3$ of 'Isopar C' in place of the 30 $cm^3$ of carbon tetrachloride. A brown solid was formed. Analysis of a sample from the final suspension in 'Isopar C' showed the presence of, in m mol/$dm^3$, 164 of Ti, 26 of V, 29 of Cr, 110 of Mg and 810 of Cl.

EXAMPLES 26 TO 37

The products of Examples 20 to 25 were used to effect the polymerisation of ethylene or propylene.

The propylene used for the polymerisation had been purified by passing gaseous propylene in turn through a column (7.6 cm diameter, 0.91 m length) containing

1.6 mm granules of Alcoa F1 alumina at 50-60°C, and then through a similar column containing BTS catalyst (Cupric oxide reduced to finely divided metallic copper on a magnesium oxide support) at 40-50°C, condensing the issue gas and passing the liquid propylene through four columns (all 7.6 cm diameter; two of 0.91 m in length, two of 1.83 m in length) at 25°C, each containing 1.6 mm pellets of Union Carbide 3A molecular sieves.

This treatment reduced the water content of the monomer from 5-10 ppm by volumme of <1 ppm by volume and the oxygen content from 1-2 ppm by volume to <0.5 ppm by volume. The level of inert compounds (nitrogen, ethane, etc) was unchanged at 0.3% and the level of unsaturated hydrocarbons (allene, methylacetylene etc) was unchanged at <1 ppm.

The ethylene was purified by passing gaseous ethylene through columns containing 1.6 mm pellets of Union Carbide 3A molecular sieves as described for the propylene purification.

A polymerisation flask equipped with efficient stirrer and a water jacket was dried carefully and 1 $dm^3$ of an inert hydrocarbon diluent having a boiling range of about 170-185°C was introduced. The diluent was evacuated at 60°C, purged with nitrogen and evacuated, which treatment effectively reduced the water and oxygen contents of the diluent to below 10 ppm by weight. The diluent was then saturated with the purified monomer (ethylene or propylene) to one atmosphere pressure. 10 millimoles of triisobutylaluminium were introduced, followed by an aliquot of a suspension containing the product of one of Examples 20 to 25. The pressure in the reaction vessel was maintained at one atmosphere by supply of gaseous monomer. The run was terminated by displacing the monomer with air. A sample of supernatant liquid was extracted in the case of propylene polymerizations to

determine the concentration of soluble polymer dissolved in the diluent. The polymerisation mixture was filtered and the solid polymer was washed three times with petrol ether and dried in a vacuum oven (pressure less than 1 mm Hg) at 80°C for polyethylene and 120°C for polypropylene. The yield of soluble polypropylene was calculated from the measured concentration and the volume of diluent used (1 $dm^3$). The total yield of polypropylene was the grammes of solid plus grammes of soluble polymer divided by the amount of the transition metal composition added (expressed as number of millimoles of total transition metal). The percentage of soluble polypropylene is determined from the relationship:-

$$\% \text{ soluble polypropylene} = \frac{100 \times \text{Wt of soluble polymer}}{\text{Wt of total (solid + soluble) polymer}}$$

The results are presented in the Table 3.

Table 3

| Example | Transition Metal | | Monomer | Time (hours) | Yield (g/m mol) (f) | % Diluent Soluble Polymer (h) |
|---|---|---|---|---|---|---|
| | Type (e) | Amount (m mol) | (c) | | | |
| 26 | 20 | 0.5 | E | 3 | 107 | - |
| 27 | 20 | 0.5 | P | 3 | 65 | 36 |
| 28 | 21 | 0.25 | E | 3 | 450 | - |
| 29 | 21 | 0.25 | P | 3 | 89 | 35.4 |
| 30 | 22 | 0.515 | E | 3 | 73 | - |
| 31 | 22 | 0.515 | P | 3 | 66 | 38.9 |
| 32 | 23 | 0.29 | E | 1 | 252 | - |
| 33 | 23 | 0.070 | P | 3 | 51 | 42.7 |
| 34 | 24 | 0.12 | E | 2 | 258 | - |
| 35 | 24 | 0.12 | P | 3 | 28* | ND |
| 36 | 25 | 0.22 | E | 2 | 427 | - |
| 37 | 25 | 0.22 | P | 3 | 7* | ND |

Notes to Table 3

Note (c) is as defined in Notes to Table 1.

(e) 20, 21, 22, 23, 24 and 25 are the products of Examples 20, 21, 22, 23, 24 and 25 respectively.

(f)* Calculated from the amount of propylene introduced into the polymerisation vessel.

(h) Calculated from the relationship quoted for determining % of soluble polypropylene.

EXAMPLE 38

The procedure described in Example 15A was repeated with the following modifications. The flask used was not provided with an integral sintered glass plate and filtration and washing were effected by decantation. The residual solid was suspended in sufficient n-heptane to give a suspension of total volume 360 $cm^3$.

EXAMPLE 39

Into a stirred stainless steel autoclave of 30 litres capacity were introduced, under nitrogen at a pressure of 4.2 $kg/cm^2$ gauge, 13 litres of a mixture of hexane and butene-1 containing 7% by weight of butene-1. The mixture also contained 200 millimoles of aluminium trioctyl and 50 ppm by weight of an antistatic agent of the formula $C_6F_{13}O(CH_2CH_2O)$ where n has a value of from 16 to 18.

The content of the reactor were stirred and heated up to 80°C. The reactor was vented to 2.53 $kg/cm^2$ gauge pressure. Ethylene was added to give a total pressure of 80 psi gauge (5.6 $kg/cm^2$ gauge). The product of Example 38 was then added until polymerisation had been initiated and ethylene was being added at a rate of 16 litres per minute in order to maintain the pressure of 80 psi gauge (5.6 $kg/cm^2$ gauge). During the course of the polymerisation, it was necessary to increase the rate of addition of ethylene up to 30 litres per minute in order to maintain the pressure at 5.6 $kg/cm^2$ gauge. It was unnecessary to add any further quantities of the product of Example 38 in addition to the quantity used to initiate polymerisation.

Polymerisation was terminated after one hour and four minutes, when a total of 5 millimoles of vanadium contained in the product of Example 38 had been added. The polymer product was then recovered by transferring to a vessel of 200 litres capacity containing 50 litres of a

0.01 N aqueous solution of sodium hydroxide and then passing steam through the stirred mixture until all of the hexane had been evaporated. The aqueous polymer suspension was then filtered and the polymer was dried in a fluid bed drier using hot nitrogen as the fluidising gas.

## EXAMPLE 40

The polymerisation process of Example 39 was repeated with the following modifications. After heating the contents of the reactor to 80°C and venting the reactor to 2.53 $kg/cm^2$ gauge pressure, nitrogen was added to give a total pressure of 7 $kg/cm^2$ gauge, the reactor was again vented to 2.53 $kg/cm^2$ gauge pressure and ethylene was then added to give a total pressure of 5.6 $kg/cm^2$ gauge. The product of Example 38 was added until polymerisation had been initiated and it was necessary to add ethylene at a rate of between 4 and 9 litres per minute in order to maintain the pressure at 5.6 $kg/cm^2$ gauge. Once polymerisation had been initiated, a 0.5 M solution of aluminium trioctyl in hexane was continuously added at a rate of 7.5 $cm^3$ per minute. The addition of the solution of aluminium trioctyl was continued until the polymerisation was terminated. Further quantities of the product of Example 38 were added in order to maintain an ethylene feed rate of at least 4 litres per minute.

Polymerisation was terminated after 1 hour 40 minutes, when a total of 2.25 millimoles of vanadium contained in the product of Example 38 had been added.

A yield of 0.5 kg of polymer was obtained which had the following properties:

Melt flow index measured by ASTM Method D 1238-70 at 190°C using a 2.16 kg weight: 9.29

Density measured as described in ASTM 1928-70, Method A, using a density gradient column at 23°C: 923 kg/m$^3$

Stress exponent: 1.22

where stress exponent is given by the relationship:

$$\frac{\text{Log}_{10}\ \text{MFI 5} - \text{Log}_{10}\ \text{MFI 2.16}}{\text{Log}_{10}\ 5 - \text{Log}_{10}\ 2.16}$$

where MFI 5 is the melt flow index measured by ASTM Method D 1238-70 at 190°C using a 5 kg weight and MFI 2.16 is the melt flow index measured in the same manner but using a 2.16 kg weight.

EXAMPLE 41

The procedure described in Example 20 was repeated with the following variations. 50 cm$^3$ of 'Isopar C' was used in place of the carbon tetrachloride. 2 cm$^3$ of vanadium tetrachloride was used in place of the 7.5 cm$^3$ of titanium tetrachloride and 7.5 cm$^3$ of vanadium tetrachloride. 10 cm$^3$ of a 0.618 Molar solution of n-butyl-s-butylmagnesium was used in place of the 27.5 cm$^3$ of the 0.59 Molar solution of the butylmagnesium. The mixture was stirred for one hour. Subsequent stages were effected as described in Example 20. By analysis, the atomic ratio of magnesium to vanadium in the solid was found to be 0.607 to one.

EXAMPLE 42

The procedure was generally as described in Example 41 with the following exceptions. 1 cm$^3$ of vanadium oxytrichloride was used in place of the vanadium tetrachloride. 15.9 cm$^3$ of a 0.665 Molar solution of n-butyl-s-butylmagnesium was used. The mixture was stirred for 30 minutes. A further 50 cm$^3$ of 'Isopar C'

was then added to the reaction mixture. Samples of this mixture (42A) were used directly to polymerise ethylene (see Examples 47 and 48 hereafter).

The portion of the mixture which remained after removing two samples for polymerisation experiments was filtered, washed twice using 100 $cm^3$ of 'Isopar C' for each wash and then suspended in 100 $cm^3$ of 'Isopar C'. Hereafter, this washed material will be identified as 42B.

By analysis of the suspension containing 42A, the atomic ratio of magnesium to vanadium was found to be 0.65 to one and the atomic ratio of chlorine to vanadium was found to be 2.07 to one.

By analysis of the suspension containing 42B, the atomic ratio of magnesium to vanadium was found to be 0.92 to one and the atomic ratio of chlorine to vanadium was found to be 3.01 to one.

EXAMPLES 43 TO 49

The products of Examples 41 and 42 were used to polymerise ethylene. The polymerisation conditions were generally as described for Examples 26 to 37 with modifications as described hereafter.

With the exception of Example 43, in which nitrogen was used, the diluent was evacuated and purged with the monomer, or monomer mixture used in the first stage of the polymerisation. The aluminium compound was triethyl aluminium and was used in the quantities noted in Table 4. The amount of the product of Examples 41 and 42 added is also noted in Table 4. In some of the examples, polymerisation was effected using a mixture of ethylene and hydrogen. In some of the examples, polymerisation commenced using propylene, the polymerisation vessel was evacuated after 10 minutes, ethylene was added to the vessel (to replace the propylene) and polymerisation was continued for a total time of two hours. The

polymerisation temperature was 50°C. Further details of the conditions used and the results obtained are given in Table 4.

Table 4

| Example | Transition Metal | | TEA (k) | $H_2$ amount | P | Yield |
|---|---|---|---|---|---|---|
| | Type (j) | Amount (m mol) | Amount (m mol) | (%) (l) | (m) | (gm ) |
| 43 | 41 | 0.3 | 7.5 | Nil | No | 55.4 |
| 44 | 41 | 0.3 | 7.5 | Nil | Yes | 109.2 |
| 45 | 41 | 0.3 | 7.5 | Nil | Yes | 102.8 |
| 46 | 41 | 0.074 | 1.8 | Nil | Yes | 35.9 |
| 47 | 42A | 0.25 | 2.0 | Nil | No | 13.5 |
| 48 | 42A | 0.25 | 2.0 | 1.5 | No | 11.6 |
| 49 | 42B | 0.13 | 2.0 | 1.5 | No | 7.7 |

Notes to Table 4

(j) 41, 42A and 42B are the products of Examples 41, 42A and 42B respectively.

(k) TEA is triethyl aluminium.

(l) The amount of hydrogen is volume % based on the mixture of ethylene and hydrogen.

(m) P refers to a pre-treatment with propylene for 10 minutes as described; No indicates that no such pre-treatment was effected and only ethylene was polymerised, Yes indicates that the pre-treatment was effected.

EXAMPLE 50

A clean dry 500 $cm^3$ vessel, fitted with means for filtering off solids, a reflux condenser surmounted by a white oil bubbler, a mechanical stirrer, a nitrogen inlet and a penetrable rubber stopper was assembled hot and purged with nitrogen. To this vessel were charged 50 $cm^3$ of pure dry 'Isopar C', followed by 1.0 $cm^3$ of freshly prepared vanadium tetrachloride. 8.3 $cm^3$ of a 0.565 molar solution in heptane of a soluble magnesium dibutyl mixture were then added by syringe, and the mixture was stirred at ambient temperature for 45 minutes. The resultant solid precipitate was filtered off, washed three times with fresh 'Isopar C' using 100 $cm^3$ for each wash and the solid was dried at ambient temperature by passing dry nitrogen through it overnight. 35 $cm^3$ of titanium tetrachloride were then added by syringe to the solid and the mixture was stirred and heated up to 120°C. The mixture was maintained, with stirring, at 120°C for 3 hours. The remaining solid material was then separated by filtration and washed three times using 100 $cm^3$ of fresh 'Isopar C' at ambient temperture for each wash. The washed solid was then suspended in 100 $cm^3$ of fresh 'Isopar C'.

EXAMPLE 51

Ethylene was polymerised using a procedure generally as described in Examples 5 to 14 with the variations noted hereafter. A 1 $dm^3$ reaction vessel was used. Polymerisation was effected using 500 $cm^3$ of 'Isopar C' as the polymerisation diluent. The polymerisation temperature was 50°C. One millimole of aluminium triethyl was used together with 1 $cm^3$ of the suspension obtained as the product of Example 50. Polymerisation was continued for two hours and a yield of 57.8 grammes of polymer was obtained.

EXAMPLE 52

The procedure of Example 50 was repeated with the variations noted hereafter.

The vessel was charged with 20 $cm^3$ of fresh 'Isopar C'. 1.0 $cm^3$ of vanadium oxytrichloride ($VOCl_3$) was added followed by 18.7 $cm^3$ of a 0.565 M solution of magnesium dibutyl, and the mixture was stirred. Stirring was continued for 45 minutes, after which the solid product was filtered off under pressure of nitrogen and washed three times using 100 $cm^3$ of fresh 'Isopar C' for each wash. The solid was dried by immersing the lower part of the vessel in an oil bath at 110-120°C and by passing dry nitrogen through the solid for three hours.

20 $cm^3$ of titanium tetrachloride were then added to the solid, and the mixture was stirred at 110 to 120°C for 2 hours. The solid was then filtered off and washed four times using 100 $cm^3$ of fresh 'Isopar C' at ambient temperature for each wash. The solid was finally suspended in 100 $cm^3$ of fresh 'Isopar C'.

EXAMPLE 53

Ethylene was polymerised using the procedure of Example 51 with the exception that 1 $cm^3$ of the suspension obtained as the product of Example 52 was used. A yield of 68.0 grammes of polymer was obtained.

EXAMPLE 54

The procedure of Example 50 was repeated with the variations noted hereafter.

The vessel was charged with 100 $cm^3$ of fresh 'Isopar C'. 5.0 $cm^3$ of vanadium oxytrichloride were added followed by 4.83 $cm^3$ of n-butanol (molar ratio $VOCl_3$:nBuOH was 1:1). This mixture was stirred for ten minutes. 41.5 $cm^3$ of the solution of the magnesium dibutyl mixture was then added. A precipitate was formed and stirring of the mixture was continued for 45 minutes.

The solid product was filtered off and washed once with 50 $cm^3$ of fresh 'Isopar C' and a further twice using 100 $cm^3$ of fresh 'Isopar C' for each wash. The solid was finally suspended in 100 $cm^3$ of fresh 'Isopar C'.

EXAMPLE 55

Ethylene was polymerised using the procedure of Example 51 with the exception that 0.5 $cm^3$ of the suspension obtained as the product of Example 54 was used. A yield of 4 grammes of polymer was obtained.

CLAIMS

1. A process for the production of a transition metal composition which comprises reacting at least one transition metal compound with an organic magnesium compound, or a complex or mixture of an organic magnesium compound with an aluminium compound, wherein the at least one transition metal compound includes at least one transition metal compound of the formula

$$MO_aR^1_bX_n$$

wherein

M is a transition metal of Group IVA, VA or VIA of the Periodic Table;

X is a halogen atom;

$R^1$ is a hydrocarbon radical or a substituted hydrocarbon radical or a group $OR^2$;

$R^2$ is a hydrocarbon radical or a substituted hydrocarbon radical;

a is 0, 1 or 2;

b is 0 or a number up to the valency of M;

n is 0 or a number up to the valency of M; and

2a+b+n equals the valency of M; with the provisos 1) that n is less than four when M is titanium, and 2) that 2a is less than the valency of M.

2. A process as claimed in claim 1 wherein at least two transition metal compounds are reacted with the organic magnesium compound or the complex or mixture of an organic magnesium compound with an aluminium compound wherein a) the at least two transition metal compounds are both compounds of the formula $MO_aR^1_bX_n$ or b) at least one transition metal compound is a compound of the formula $MO_aR^1_bX_n$ and at least one transition metal compound is a titanium tetrahalide.

3. A process as claimed in claim 1 or claim 2 wherein the at least one transition metal compound is reacted with a compound of the formula

$$R^3_2Mg$$

wherein

each $R^3$ which may be the same or different, is an alkyl group.

4. A process as claimed in any one of claims 1 to 3 wherein the at least one transition metal compound is reacted with an organic magnesium compound or a complex or mixture of an organic magnesium compound with an aluminium compound to give a solid reaction product, the solid reaction product is heated to a temperature in the range from 60°C up to 150°C and this temperature is maintained for a time which is from 0.5 up to 10 hours.

5. A process as claimed in any one of claims 1 to 4 wherein the reaction is effected in the presence of a halogenated compound.

6. A process as claimed in claim 5 wherein the halogenated compound is a polyhalogenated halocarbon compound, which may optionally contain hydrogen.

7. A process as claimed in any one of claims 1 to 3, 5 and 6 wherein a solid reaction product is obtained, the solid reaction product is separated from the liquid reaction medium and contacted with one or more halogen-containing transition metal compounds.

8. A process as claimed in claim 7 wherein the solid reaction product is obtained using vanadium tetrachloride or vanadium oxytrichloride as the at least one transition metal and the solid reaction product is contacted with titanium tetrachloride.

9. A polymerisation catalyst system which is obtained by mixing together 1) a transition metal

composition obtained by the process of any one of claims 1 to 8; and 2) at least one organic compound of aluminium, or of a non-transition metal of Group IIA of the Periodic Table, or a complex of an organic compound of a non-transition metal of Group IA or IIA of the Periodic Table together with an organic compound of aluminium.

10. An olefine polymerisation process which comprises contacting, under polymerisation conditions, at least one olefine monomer with a catalyst as claimed in claim 9.

FIG.1

| | |
|---|---|
| A | $MO_a R^1_b X_n$ |
| B | $R^3_c Mg R^4_{(2-c)}$ |
| C | $R^3_c Mg R^4_{(2-c)} dR^3_e Al R^4_{(3-e)}$ |
| D | $R^3_c Mg R^4_{(2-c)} + dR^3_e Al R^4_{(3-e)}$ |
| E | $M^1_f M^2_h M^3_{(1-f-h)} Mg_k Al_m O_p X_q\ r.L$ |
| F | $Ti_f V_{(1-f)} Mg_k O_p X_q$ |
| G | $CH_2 = CHR^5$ |

FIG.2

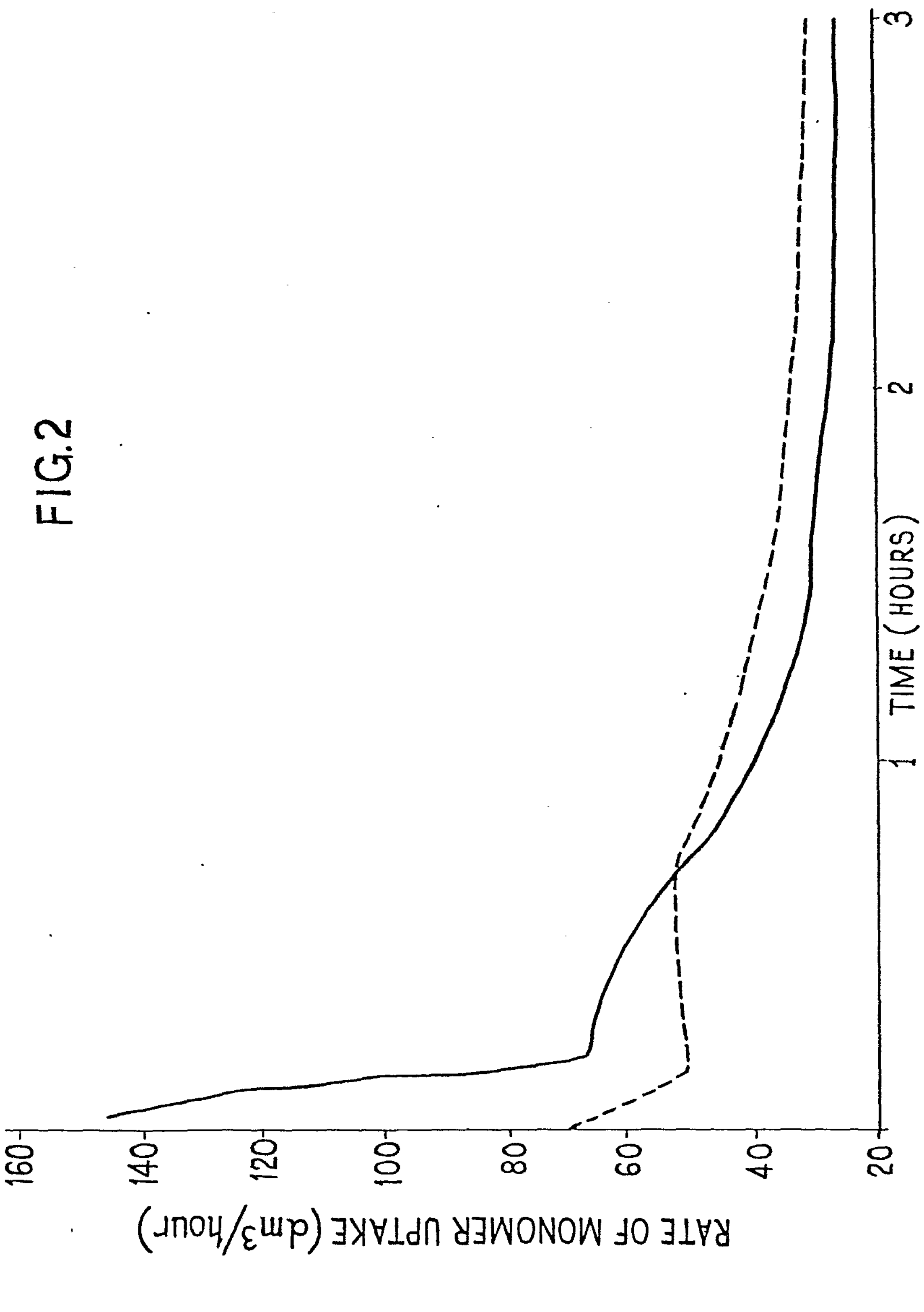
RATE OF MONOMER UPTAKE ($dm^3$/hour)
160
140
120
100
80
60
40
20
1
2
3
TIME (HOURS)